# FASCICULE DE BREVET EUROPEEN

(11) **EP 4 089 634 B1**
(45) Date de publication et mention de la délivrance du brevet: **22.07.2026**
(21) Numéro de dépôt: 22172352.1
(22) Date de dépôt: 09.05.2022
(51) Int. Cl.: G06T 7/11, G06T 7/194, G06V 10/25, G06V 10/82

(54) **PROCÉDÉ D'ENRICHISSEMENT D'UNE IMAGE PAR MÉCANISME D'ATTENTION**
BILDVERBESSERUNG DURCH ATTENTION-MECHANISMUS
IMAGE ENRICHMENT BY ATTENTION MECHANISM

(30) Priorité: 11.05.2021 FR 2104983
(43) Date de publication de la demande: 16.11.2022
(73) Titulaire: IDEMIA Road Safety France, 92400 Courbevoie (FR)
(72) Inventeur: BEN SALLAM, Aiman, 92400 COURBEVOIE (FR); CSILLAG, Dora, 92400 COURBEVOIE (FR)
(74) Mandataire: Plasseraud IP

(56) Documents cités:
- GAO LIN ET AL: "RASWNet: An Algorithm That Can Remove All Severe Weather Features from a Degraded Image", IEEE ACCESS, IEEE, USA, vol. 8, 20 April 2020 (2020-04-20), pages 76002 - 76018, XP011786033, [retrieved on 20200501], DOI: 10.1109/ACCESS.2020.2989355
- DA HE ET AL: "Adherent Mist and Raindrop Removal from a Single Image Using Attentive Convolutional Network", ARXIV.ORG, CORNELL UNIVERSITY LIBRARY, 201 OLIN LIBRARY CORNELL UNIVERSITY ITHACA, NY 14853, 3 September 2020 (2020-09-03), XP081754252
- NASARUDDIN NASARUDDIN ET AL: "Deep anomaly detection through visual attention in surveillance videos", vol. 7, no. 1, 1 December 2020 (2020-12-01), XP055866625, Retrieved from the Internet <URL:https://journalofbigdata.springeropen.com/track/pdf/10.1186/s40537-020-00365-y.pdf> DOI: 10.1186/s40537-020-00365-y
- REN MENGYE ET AL: "End-to-End Instance Segmentation with Recurrent Attention", 2017 IEEE CONFERENCE ON COMPUTER VISION AND PATTERN RECOGNITION (CVPR), IEEE COMPUTER SOCIETY, US, 21 July 2017 (2017-07-21), pages 293 - 301, XP033249365, ISSN: 1063-6919, [retrieved on 20171106], DOI: 10.1109/CVPR.2017.39
- MINEMATSU TSUBASA ET AL: "Simple background subtraction constraint for weakly supervised background subtraction network", 2019 16TH IEEE INTERNATIONAL CONFERENCE ON ADVANCED VIDEO AND SIGNAL BASED SURVEILLANCE (AVSS), IEEE, 18 September 2019 (2019-09-18), pages 1 - 8, XP033640697, DOI: 10.1109/AVSS.2019.8909896

## Description

### DOMAINE TECHNIQUE GENERAL

La présente invention concerne le domaine de l'apprentissage supervisé et de la vision par ordinateur. Plus particulièrement, elle concerne une méthode d'apprentissage exploitant en entrée le résultat d'un mécanisme d'attention obtenu par soustraction de l'arrière-plan. Ce mécanisme d'attention ne nécessite pas d'apprentissage spécifique.

### ETAT DE L'ART

Le développement du domaine de la vision par ordinateur durant ces dernières années a permis de développer des modèles de prédiction de plus en plus complexes capables de réaliser des taches difficiles. Cependant, dans le même temps le volume et la taille des données à analyser à lui aussi explosé, il est donc crucial de permettre aux modèles de traiter ces données de manière plus rapide tout en conservant, ou même en améliorant, l'exactitude des prédictions de ces modèles.

Pour tenter de répondre à ces besoins, des « mécanismes d'attention » sont ajoutés aux modèles de prédiction. Par mécanisme d'attention on comprendra un moyen d'assister un modèle d'apprentissage, par exemple un réseau de neurones, dans sa décision en introduisant une notion d'importance et/ou de localisation de certaines parties des informations fournies en entrée du modèle d'apprentissage. Un tel modèle d'apprentissage peut être un modèle de détection ou un modèle de segmentation, ou éventuellement de classification.

Dans le domaine de la vision par ordinateur l'attention est représentée par un poids associé à chaque pixel d'une image (ou trame dans le cas de vidéos) à traiter, formant ainsi une image appelée « masque » représentant les zones de l'image de base comportant des informations importantes pour le modèle de classification. L'utilisation d'un masque d'attention permet ainsi d'augmenter les performances d'un modèle de classification en minimisant l'influence d'éléments non pertinents sur la classification finale.

Cependant si les masques d'attentions permettent d'améliorer les performances d'un modèle de classification, ces masques doivent être obtenus préalablement, soit par un étiquetage manuel de l'image d'entrée (réduisant à néant l'utilité de tel masque lors des tâches d'utilisation du modèle de classification) soit par un modèle d'apprentissage similaire à un modèle de segmentation (la segmentation étant une tache de classification consistant à associer une classe à chaque pixel d'une image). En pratique les mécanismes d'attention sont donc utilisés soit uniquement lors de l'entrainement du réseau de classification à partir de données annotées manuellement tel que décrit dans *Derakhshani, M. M., Masoudnia, S.,* Shaker, A. H., Mersa, O., Sadeghi, M. A., Rastegari, M., & Araabi, B. N. (2019). Assisted excitation of activations: A learning technique to improve object detectors*,* dans ce cas le mécanisme d'attention à uniquement pour effet d'accélérer l'entrainement du modèle de classification choisi, soit le masque d'attention est « appris », c'est-à-dire qu'il est généré par un second modèle de classification entrainé pour une tache de segmentation, une telle méthode est décrite dans Roh, B., Cho, H., Ju, M., & Pyo, S.H. (2020). BABO: Background Activation Black-Out for Efficient Object Detection. Cependant, ces méthodes nécessitent des informations complexes à obtenir, telles que des cartes de segmentation, et nécessitent des ressources de calculs plus importantes afin de mettre en œuvre des mécanismes complexe permettant l'utilisation de ces informations.

Nasaruddin, N., Muchtar, K., Afdhal, A. et al. Deep anomaly detection through visual attention in surveillance videos. J Big Data 7, 87 (2020). https://doi.org/10.1186/s40537-020-00365-y describes a method for learning anomaly behavior in surveillance videos by finding an attention region from spatiotemporal information. In this method, a background subtraction (BG) for extracting motion, indicating the location of attention regions is employed. The resulting regions are finally fed into a three-dimensional Convolutional Neural Network.

### PRESENTATION DE L'INVENTION

Selon un premier aspect, la présente invention concerne un procédé de traitement d'une image par un modèle d'apprentissage automatique comprenant des étapes de :
- réception de ladite image, comprenant au moins un canal, à traiter ultérieurement par le modèle d'apprentissage automatique ;
- création d'un masque d'attention par soustraction d'une image d'arrière-plan correspondant à l'arrière-plan de l'image à traiter, le masque représentant les zones de l'image correspondant au premier plan ;
- création d'un blob, le blob étant défini comme une image enrichie comprenant le au moins un canal de l'image à traiter ainsi qu'un canal supplémentaire correspondant au masque d'attention ;
- traitement du blob par le modèle d'apprentissage automatique.

Selon d'autres caractéristiques avantageuses et non limitatives :
- le masque d'attention est une image quantifiée dans laquelle chaque pixel de l'image à traiter est identifié comme faisant partie d'une catégorie ;
- le masque d'attention est créé par une méthode de soustraction de l'arrière-plan modélisant l'arrière-plan par un modèle de mélange gaussien ;
- le modèle d'apprentissage automatique est au moins l'un parmi :
   ∘ un modèle de classification ;
   ∘ un modèle de détection ;
   ∘ ou un modèle de segmentation ;
- le modèle d'apprentissage automatique est un réseau de neurones convolutif.

Selon un deuxième aspect, la présente invention concerne un procédé d'entrainement d'un modèle d'apprentissage automatique, comprenant des étapes de :
- réception d'une image, comprenant au moins un canal, à traiter par le modèle d'apprentissage automatique ;
- création d'un masque d'attention par soustraction d'une image d'arrière-plan correspondant à l'arrière-plan de l'image à traiter, le masque représentant les zones de l'image correspondant au premier plan ;
- création d'un blob comprenant le au moins un canal de l'image à traiter ainsi qu'un canal supplémentaire correspondant au masque d'attention ;
- traitement du blob par le modèle d'apprentissage automatique et calcul d'une valeur représentative de la performance du modèle d'apprentissage automatique.

Selon un troisième aspect, la présente invention concerne un procédé d'entrainement d'un modèle d'apprentissage automatique, comprenant des étapes de :
- réception d'une image, comprenant au moins un canal, à traiter par le modèle d'apprentissage automatique ;
- création d'un masque d'attention à partir d'un masque de segmentation prédéfini associé à l'image à traiter ;
- création d'un blob comprenant le au moins un canal de l'image à traiter ainsi qu'un canal supplémentaire correspondant au masque d'attention ;
- traitement du blob par le modèle d'apprentissage automatique et calcul d'une valeur représentative de la performance du modèle d'apprentissage automatique.

Selon un quatrième et un cinquième aspect sont proposés un produit programme d'ordinateur comprenant des instructions de code pour l'exécution d'un procédé selon le premier aspect de traitement d'une image par un modèle d'apprentissage automatique ou pour l'exécution d'un procédé selon le deuxième ou le troisième aspect d'entrainement d'un modèle d'apprentissage automatique ; et un moyen de stockage lisible par un équipement informatique sur lequel un produit programme d'ordinateur comprend des instructions de code pour l'exécution d'un procédé selon le premier aspect de traitement d'une image par un modèle d'apprentissage automatique ou pour l'exécution d'un procédé selon le deuxième ou le troisième aspect d'entrainement d'un modèle d'apprentissage automatique.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La figure 1 est un schéma d'une architecture pour la mise en œuvre du procédé selon l'invention ;
La figure 2 représente les étapes d'un mode de réalisation du mécanisme d'attention de données selon l'invention.

### DESCRIPTION DETAILLEE

### Architecture

Selon deux aspects complémentaires de l'invention, sont proposés :
- un procédé de traitement d'une image par un modèle d'apprentissage automatique comprenant une étape antérieure d'exécution d'un mécanisme d'attention de données ;
- un procédé d'entrainement dudit modèle d'apprentissage automatique

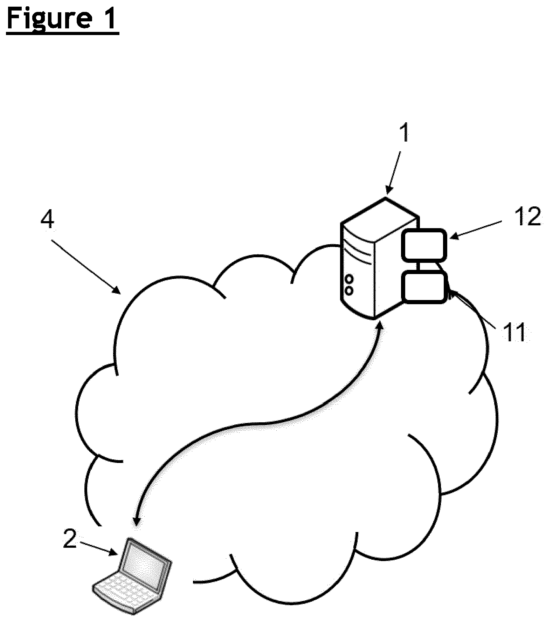

En référence à la **figure 1****,** les présents procédés sont mis en œuvre par des moyens de traitement de données 11 (qui consistent typiquement en un ou plusieurs processeurs) d'un équipement 1. Ce dernier peut être par exemple un ou plusieurs serveurs mettant en œuvre le procédé de traitement d'image ou le procédé d'entrainement du modèle d'apprentissage, connectés à un réseau 4 typiquement internet, via lequel il est relié à des clients 2 (par exemple des PC personnels) disposant de données à traiter typiquement des images sur lesquelles un utilisateur souhaite réaliser une tâche de classification, de segmentation, de régression etc.

L'équipement 1 comprend en outre des moyens de stockage de données 12 (typiquement un ou plusieurs disques durs).

Il est tout à fait possible que les deux équipements 1, 2 soient confondus, mais de façon préférée le serveur 1 est celui d'un fournisseur de solution de sécurité, et le client 2 un équipement grand public notamment un ordinateur personnel, un dispositif de surveillance, un véhicule autonome etc.

Le serveur 1 stocke une base de données d'apprentissage, i.e. un ensemble d'images d'entrainement pour lesquelles on dispose déjà d'une « réalité de terrain » correspondant au résultat attendu suite au traitement de ces images par le modèle d'apprentissage. Cette base de données d'apprentissage peut en outre comprendre des masques de segmentation associés à tout ou parties des images d'entrainement, permettant ainsi d'améliorer l'efficacité du mécanisme d'attention lors de l'apprentissage.

### Procédé d'augmentation de données

La présente invention propose un nouveau mécanisme d'attention permettant d'enrichir des données, image ou vidéo, avant leur traitement par un modèle d'apprentissage automatique. Par mécanisme d'attention permettant l'enrichissement de données, on comprendra le fait d'isoler les informations les plus pertinentes d'au moins une image ou d'une vidéo (par la suite on entendra par une image, soit une image seule, soit une trame d'une vidéo) et relatives à la problématique que le modèle d'apprentissage souhaite résoudre. Les données spécialisées ainsi générées pourront alors être fournies au modèle d'apprentissage permettant un traitement optimisé. Par modèle d'apprentissage automatique on entend une fonction paramétrique prenant en entrée des données à traiter (par exemple des images) et fournis en sortie une information relative aux données d'entrée, souvent appelée « prédiction », les paramètres de cette fonction paramétrique étant défini lors d'une étape dite « d'apprentissage ». Un modèle d'apprentissage automatique peut être par exemple un modèle de classification, détection, segmentation, de régression etc., en particulier mis en œuvre par un réseau de neurones (notamment à convolution, CNN pour Convolutional Neural Network en anglais) dont les poids constituent les paramètres de la fonction paramétrique.

L'invention définit d'une part un mécanisme d'attention d'une image et d'autre part un procédé de traitement d'une image comprenant, en « pré-traitement », l'enrichissement de ladite image au moyen dudit mécanisme d'attention, puis la mise en œuvre dudit traitement sur la base de l'image enrichie et non de l'image d'entrée originale.

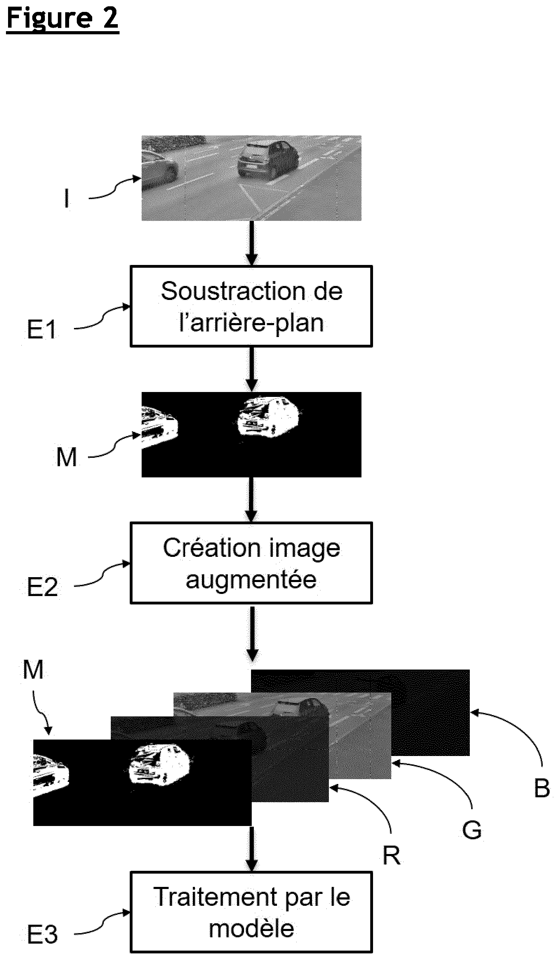

En référence à la **figure 2****,** le mécanisme d'attention selon l'invention reçoit une image I (ou trame dans le cas d'une vidéo) à traiter, cette image peut être une image en couleur, les couleurs étant codées par des canaux représentant des valeurs d'intensité associé à des couleurs prédéfinie. Les couleurs d'une image peuvent ainsi être codées selon le système rouge, vert, bleu (abrégé RGB), mais aussi par les systèmes YUV, cyan-magenta-jaune-noir (CMJN), teinte saturation luminosité (TSL) etc. Il est bien évidement aussi possible d'appliquer le présent procédé à des images en niveau de gris, on aura alors une image à un seul canal, représentant le niveau de gris de chacun des pixels de l'image.

Une étape, E1, de soustraction de l'arrière-plan est alors réalisée, le principe de base des méthodes de soustractions d'arrière-plan consiste à identifier au moins une (ou plusieurs) partie(s) ou zone(s) de l'image comme appartenant à l'arrière-plan puis de « soustraire » cette au moins une partie ou zone de l'image à l'image, I, à traiter. Par arrière-plan, on entend une partie de l'image non pertinente pour la tâche réalisée par le modèle d'apprentissage automatique, par opposition à un premier plan ou région d'intérêt (abrégé ROI pour Region Of Interest), on obtient dans ce cas un masque dit « binaire ». Ainsi, en prenant l'exemple de la surveillance d'un carrefour, l'arrière-plan correspondra à la route, et l'avant plan ou ROI aux véhicules circulants sur cette route. De même, dans le cas du traitement d'une vidéo l'arrière-plan sera le plus souvent constitué de la partie fixe de l'image, et l'avant plan sera constitué des éléments en mouvement dans cet arrière-plan. Alternativement, il est aussi possible, plus que juste un arrière-plan et premier plan, d'identifier, par exemple, un deuxième, voir un troisième plan, le masque obtenu pourra alors être simplement qualifié de « catégorisé » (ou « quantifié ») dans le sens où il n'est plus juste binaire. Les catégories pourront ainsi être : premier plan, deuxième plan, troisième plan etc.

Ainsi, une approche simple de la soustraction d'arrière-plan consiste à obtenir une première image d'un certain environnement sans le moindre objet présent, par exemple une photo d'une route sans aucune voiture, puis afin de soustraire l'arrière-plan de l'image, I, à traiter, simplement de soustraire les valeurs de chaque pixel de la première image aux valeurs des pixels correspondant de l'image, I, à traiter. On obtient alors une matrice de valeurs, M, correspondant à l'écart entre les valeurs de pixel de la première image (correspondant au fond) et l'image, I, à traiter, une valeur proche de la valeur zéro indiquant une faible différence, donc que le pixel fait partie de l'arrière-plan. Le résultat de cette soustraction peut en outre être seuillé afin de limiter l'effet de petites variations entre les deux images.

Cependant, bien que cette méthode de soustraction de l'arrière-plan soit efficace et très simple à mettre en œuvre en l'absence de mouvement de la caméra, et lorsqu'il est possible d'obtenir une image de ce qui est considéré comme l'arrière-plan, dès lors qu'au moins une de ces conditions n'est pas respectée, c'est en particulier souvent le cas pour les vidéos, cette méthode n'est plus utilisable. Il existe cependant de nombreuses méthodes alternatives reposant sur une modélisation de l'arrière-plan, et en particulier une modélisation par des modèles de mélange gaussien (en anglais *Gaussian Mixture Model* abrégé GMM). De telles méthodes sont notamment décrites dans les documents :
- KaewTraKulPong, P., & Bowden, R. (2002). An improved adaptive background mixture model for real-time tracking with shadow detection ;
- Zivkovic, Z. (2004, August). Improved adaptive Gaussian mixture model for background subtraction ;
- Zivkovic, Z., & Van Der Heijden, F. (2006). Efficient adaptive density estimation per image pixel for the task of background subtraction ; et
- Godbehere, A. B., Matsukawa, A., & Goldberg, K. (2012, June). Visual tracking of human visitors under variable-lighting conditions for a responsive audio art installation.

Ces méthodes sont particulièrement intéressantes car elles permettent d'avoir un mécanisme d'attention non appris contrairement aux mécanismes d'attention traditionnels, souvent basés sur des modèles d'apprentissage qui nécessitent donc des données d'entrainement spécifiques.

L'image (ou matrice) M, ainsi calculée (étape E2), aussi appelée masque d'attention, par la méthode de soustraction de l'arrière-plan peut alors être ajoutée à l'image, I, à traiter sous la forme d'un canal additionnel, en plus des canaux, R, G, et B, déjà utilisés pour représenter l'information relative à la couleur de l'image. La donnée ainsi créée, appelée image enrichie ou « blob », un blob n'étant rien de plus que la généralisation à n-canaux d'un objet de type image - l'image, I, à traiter seule pouvant d'ailleurs être vue comme un cas particulier de blob d'entrée à trois canaux (dans le cas d'une image RGB).

Ce blob peut alors être traité lors d'une étape E3, par un modèle d'apprentissage automatique. Ce modèle d'apprentissage automatique pouvant être un réseau de neurones convolutif et/ou récurrent, un Séparateur à Vaste Marge (abrégé SVM) etc. La classification peut consister en un simple label associé à l'image I, mais aussi en une association d'un label à chaque pixel de l'image I (segmentation), ou bien la localisation d'un élément particulier dans l'image, de même, il est aussi possible d'associer plusieurs labels à une seule image, ou à un seul pixel. Lorsque le modèle d'apprentissage automatique utilisé est un réseau de neurones, tous les canaux du blob pourrons évidement être utilisés comme entrée au niveau de la première couche du réseau, toutefois, dans des modes de réalisation alternatifs, certains canaux du blob pourront être utilisés comme entrée par une couche différente.

### Utilisation du procédé d'augmentation de données

Le mécanisme d'attention décrit précédemment peut être utilisé de plusieurs manières différentes, dans un premier mode de réalisation ce procédé peut être utilisé lors de l'entrainement ainsi que lors de l'utilisation d'un modèle d'apprentissage automatique particulier. Il est alors possible d'améliorer les performances du modèle d'apprentissage automatique en ajoutant une information relative à la position des éléments important pour la classification dans l'image, tout en limitant l'impact sur les ressources de calcul nécessaires à l'entrainement et l'utilisation du modèle d'apprentissage automatique par rapport à l'utilisation d'un modèle supplémentaire en amont du modèle d'apprentissage automatique réalisant la tâche de génération d'un masque d'attention. De plus, l'utilisation d'une méthode de soustraction de l'arrière-plan, afin de générer un masque d'attention, permet d'améliorer la performance du modèle d'apprentissage automatique sans nécessiter d'informations supplémentaires lors de l'entrainement telles que des cartes de segmentation.

Il est cependant possible d'exploiter l'existence de telles cartes de segmentation lors de l'entrainement du modèle d'apprentissage automatique en remplaçant le masque d'attention généré par une méthode de soustraction de l'arrière-plan par une carte de segmentation existante, améliorant ainsi l'efficacité du modèle. Lors de l'utilisation du modèle d'apprentissage automatique l'information utilisée reste cependant le masque d'attention généré par la méthode de soustraction de l'arrière-plan.

## Revendications

1. Procédé de traitement d'une image par un modèle d'apprentissage automatique comprenant des étapes de :
- réception de ladite image (I), comprenant au moins un canal, à traiter ultérieurement par le modèle d'apprentissage automatique ;
- création d'un masque d'attention (M) par soustraction d'une image d'arrière-plan correspondant à l'arrière-plan de l'image à traiter (E1), le masque représentant les zones de l'image correspondant au premier plan ;
- création d'un blob (E2), le blob étant défini comme
une image enrichie comprenant le au
moins un canal de l'image à traiter (R, G, B) ainsi qu'un canal supplémentaire correspondant au masque d'attention (M) ;
- traitement du blob par le modèle d'apprentissage automatique.

2. Procédé de traitement d'image selon la revendication 1 dans lequel le masque d'attention est une image quantifiée dans laquelle chaque pixel de l'image à traiter est identifié comme faisant partie d'une catégorie.

3. Procédé de traitement d'image selon l'une des revendications 1 et 2 dans lequel le masque d'attention est créé par une méthode de soustraction de l'arrière-plan modélisant l'arrière-plan par un modèle de mélange gaussien.

4. Procédé de traitement d'image selon l'une des revendications 1 à 3 dans lequel le modèle d'apprentissage automatique est au moins l'un parmi :
- un modèle de classification ;
- un modèle de détection ;
- ou un modèle de segmentation.

5. Procédé de traitement d'image selon l'une des revendications 1 à 4 dans lequel le modèle d'apprentissage automatique est un réseau de neurones convolutif.

6. Procédé d'entrainement d'un modèle d'apprentissage automatique, comprenant des étapes de :
- réception d'une image (I), comprenant au moins un canal, à traiter par le modèle d'apprentissage automatique ;
- création d'un masque d'attention (M) par soustraction d'une image d'arrière-plan correspondant à l'arrière-plan de l'image à traiter (E1), le masque représentant les zones de l'image correspondant au premier plan ;
- création d'un blob (E2), le blob étant défini comme une image enrichie comprenant le au moins un canal de l'image à traiter (R, G, B) ainsi qu'un canal supplémentaire correspondant au masque d'attention (M) ;
- traitement du blob par le modèle d'apprentissage automatique et calcul d'une valeur représentative de la performance du modèle d'apprentissage automatique.

7. Procédé d'entrainement d'un modèle d'apprentissage automatique, comprenant des étapes de :
- réception d'une image (I), comprenant au moins un canal, à traiter par le modèle d'apprentissage automatique ;
- création d'un masque d'attention (M) à partir d'un masque de segmentation prédéfini associé à l'image à traiter ;
- création d'un blob (E2), le blob étant défini comme une image enrichie comprenant le au moins un canal de l'image à traiter (R, G, B) ainsi qu'un canal supplémentaire correspondant au masque d'attention (M) ;
- traitement du blob par le modèle d'apprentissage automatique et calcul d'une valeur représentative de la performance du modèle d'apprentissage automatique.

8. Produit programme d'ordinateur comprenant des instructions de code pour l'exécution d'un procédé de traitement d'image selon l'une des revendications 1 à 5, d'un procédé d'entrainement d'un modèle d'apprentissage automatique selon l'une des revendications 6 ou 7 lorsque ledit programme est exécuté sur un ordinateur.

9. Moyen de stockage lisible par un équipement informatique sur lequel est enregistré un produit programme d'ordinateur comprenant des instructions de code pour l'exécution d'un procédé de traitement d'image selon l'une des revendications 1 à 5, d'un procédé d'entrainement d'un modèle d'apprentissage automatique selon l'une des revendications 6 ou 7 lorsque ledit programme est exécuté sur un ordinateur.

## Patentansprüche

1. Verfahren zur Bildverarbeitung mittels eines maschinellen Lernmodells mit den folgenden Schritten:
- Empfangen des zu verarbeitenden Bildes (I), das mindestens einen Kanal umfasst
- Erstellen einer Aufmerksamkeitsmaske (M) durch Subtraktion eines Hintergrundbildes, das dem Hintergrund des zu verarbeitenden Bildes (E1) entspricht, wobei die Maske die Bereiche des Bildes darstellt, die dem Vordergrund entsprechen;
- Erzeugung eines Blobs (E2), wobei der Blob definiert ist als
ein angereichertes Bild, das mindestens
mindestens einen Kanal des zu bearbeitenden Bildes (R, G, B) sowie einen zusätzlichen Kanal,
der der Aufmerksamkeitsmaske (M) entspricht;
- Verarbeitung des Blobs durch das maschinelle Lernmodell.

2. Bildverarbeitungsverfahren nach Anspruch 1, wobei die Aufmerksamkeitsmaske
ein quantisiertes Bild ist, in dem jedes Pixel des zu verarbeitenden Bildes als Teil einer Kategorie identifiziert wird.

3. Bildverarbeitungsverfahren nach einem der Ansprüche 1 und 2, wobei die
durch ein Verfahren zur Hintergrundsubtraktion erzeugt wird, bei dem der Hintergrund durch ein Gauß-Mischmodell modelliert wird.

4. Bildverarbeitungsverfahren gemäß einem der Ansprüche 1 bis 3, wobei das
des maschinellen Lernens mindestens eines der folgenden ist:
- ein Klassifikationsmodell;
- ein Erkennungsmodell;
- oder ein Segmentierungsmodell.

5. Verfahren zur Bildverarbeitung gemäß einem der Ansprüche 1 bis 4, wobei das Modell des maschinellen Lernens ein konvolutionelles neuronales Netz ist.

6. Verfahren zum Trainieren eines Modells des maschinellen Lernens, umfassend Schritte:
- Empfangen eines Bildes (I), das mindestens einen Kanal umfasst und durch das maschinelle Lernmodell verarbeitet werden soll;
- Erstellen einer Aufmerksamkeitsmaske (M) durch Subtraktion eines Hintergrundbildes, das dem Hintergrund des zu verarbeitenden Bildes entspricht (E1), wobei die Maske die Bereiche des Bildes darstellt, die dem Vordergrund entsprechen;
- Erstellen eines Blobs (E2), wobei der Blob als ein angereichertes Bild definiert ist, das den Kanal des zu verarbeitenden Bildes (R, G, B) sowie einen zusätzlichen Kanal, der der Aufmerksamkeitsmaske (M) entspricht;
- Verarbeitung des Blobs durch das maschinelle Lernmodell und Berechnung eines Wertes,
der die Leistung des maschinellen Lernmodells repräsentiert.

7. Verfahren zum Trainieren eines maschinellen Lernmodells, umfassend folgende Schritte:
- Empfang eines Bildes (I), das mindestens einen Kanal umfasst, das vom
- Erstellen einer Aufmerksamkeitsmaske (M) ausgehend von einer vordefinierten Segmentierungsmaske
, die dem zu verarbeitenden Bild zugeordnet ist;
- Erzeugung eines Blobs (E2), wobei der Blob als ein angereichertes Bild definiert ist, das mindestens zu verarbeitenden Bild (R, G, B) sowie einen zusätzlichen Kanal, der
der Aufmerksamkeitsmaske (M) entspricht;
- Verarbeitung des Blobs durch das maschinelle Lernmodell und Berechnung eines Wertes
, der die Leistung des maschinellen Lernmodells repräsentiert.

8. Computerprogrammprodukt, das Codeanweisungen zur Ausführung eines Bildverarbeitungsverfahrens gemäß einem der Ansprüche 1 bis 5, eines Verfahrens zum Trainieren eines maschinellen Lernmodells gemäß einem der Ansprüche 6
oder 7, wenn das Programm auf einem Computer ausgeführt wird.

9. Ein von einer Computereinrichtung lesbares Speichermedium, auf dem ein Computerprogrammprodukt gespeichert ist, das Codeanweisungen zur Ausführung eines Bildverarbeitungsverfahrens gemäß einem der Ansprüche 1 bis 5, eines Verfahrens zum Trainieren eines Modells für maschinelles Lernen gemäß einem der Ansprüche 6 oder 7, wenn das Programm auf einem Computer ausgeführt wird.

## Claims

1. A method of processing an image using a machine learning model comprising the steps of:
- receiving said image (I), comprising at least one channel, to be processed subsequently by the machine learning model;
- creating an attention mask (M) by subtracting a background image corresponding to the background of the image to be processed (E1), the mask representing the areas of the image corresponding to the foreground;
- creation of a blob (E2), the blob being defined as an enhanced image comprising at least one channel of the image to be processed (R, G, B) as well as an additional channel corresponding to the attention mask (M);
- processing the blob using the machine learning model.

2. An image processing method according to claim 1, wherein the attention mask is a quantised image in which each pixel of the image to be processed is identified as belonging to a category.

3. An image processing method according to one of claims 1 and 2, wherein the is created by a background subtraction method modelling the background using a Gaussian mixture model.

4. An image processing method according to one of claims 1 to 3, wherein the machine learning model is at least one of:
- a classification model;
- a detection model;
- or a segmentation model.

5. An image processing method according to any one of claims 1 to 4, wherein the machine learning model is a convolutional neural network.

6. A method for training a machine learning model, comprising
steps of:
- receiving an image (I), comprising at least one channel, to be processed by the machine learning model;
- creating an attention mask (M) by subtracting a background image corresponding to the background of the image to be processed (E1), the mask representing the areas of the image corresponding to the foreground;
- creating a blob (E2), the blob being defined as an enhanced image comprising the at least one channel of the image to be processed (R, G, B) as well as an additional channel corresponding
to the attention mask (M);
- processing the blob using the machine learning model and calculating a value representative of the machine learning model's performance.

7. A method for training a machine learning model, comprising
the following steps:
- receiving an image (I), comprising at least one channel, to be processed by the machine learning model;
- creating an attention mask (M) from a predefined segmentation mask associated with the image to be processed;
- creation of a blob (E2), the blob being defined as an enhanced image comprising at at least one channel of the image to be processed (R, G, B) as well as an additional channel corresponding
to the attention mask (M);
- processing the blob using the machine learning model and calculating a value representative of the performance of the machine learning model.

8. A computer program product comprising code instructions for executing an image processing method according to one of claims 1 to 5, a method for training a machine learning model according to one of claims 6
or 7 when said program is executed on a computer.

9. A computer-readable storage medium on which is recorded a computer program comprising code instructions for executing an image processing method according to one of claims 1 to 5, a method
for training a machine learning model according to one of claims 6
or 7 when said program is executed on a computer.
